# EUROPÄISCHE PATENTANMELDUNG

(11) **EP 0 798 477 A1**
(43) Veröffentlichungstag der Anmeldung: **01.10.1997**
(21) Anmeldenummer: 97103508.4
(22) Anmeldetag: 04.03.1997
(51) Int. Cl.: F16C 1/26

(54) **Betätigungszug**

(30) Priorität: 29.03.1996 DE 29605892 U
(71) Anmelder: Heuser, Holger, 41469 Neuss (DE)
(72) Erfinder: Heuser, Holger, 41469 Neuss (DE)
(74) Vertreter: Paul, Dieter-Alfred, Dipl.-Ing.

(57) **Zusammenfassung**

Ein Betätigungszug (1, 6) insbesondere für die Betätigung von Fahrradbremsen weist einen Führungsschlauch (2, 7) und eine darin axial bewegliche Betätigungsseele (3, 8) auf, wobei der Führungsschlauch (2, 7) einen Innenschlauch (4, 9) und einen diesen umgebenden Mantelschlauch (5, 10̸) hat. Der Innenschlauch (4, 9) besteht wenigstens hauptsächlich aus einem polymerisierten Tetrafluorethylen und der Mantelschlauch wenigstens hauptsächlich aus einem Polyarylat, Polyacrylimid, Polyetherimid, Polysulfon, Polyphenylensulfid, Polyetherketon und/oder flüssigkristallinem Polymer und/oder einem Kunststoff, dessen Steifheit und Festigkeit in dem Bereich der Steifheiten und Festigkeiten vorstehender Kunststoffe liegt.

## Beschreibung

Die Erfindung betrifft einen Betätigungszug insbesondere für die Betätigung von Fahrradbremsen mit einem Führungsschlauch und einer darin axial beweglichen Betätigungsseele, wobei der Führungsschlauch einen Innenschlauch und einen diesen umgebenden Mantelschlauch aufweist.

Betätigungszüge der vorgenannten Art sind bewährte und preiswerte Konstruktionselemente für die Übertragung von Kräften von einem Betätigungsorgan zu einem zu betätigenden Organ, und zwar insbesondere dann, wenn die Kraftübertragung nicht auf geradem Weg erfolgen kann. Sie werden auf vielen Gebieten der Technik angewendet (vgl. Leiseder, Ludwig M., Mechanische Betätigungszüge, Verlag Moderne Industrie, Landsberg/Lech, 1994), insbesondere auf dem Gebiet der Fahrzeugtechnik. Bei Fahrrädern dienen sie der Bremsenbetätigung, also der Übertragung der auf die Bremshandhebel ausgeübten Handkraft auf die Bremszangen.

Aus dem vorzitierten Buch ergibt sich, daß es Betätigungszüge in vielfältigen Ausführungsformen gibt, insbesondere was den Aufbau des Führungsschlauchs angeht. Dabei orientiert sich der Aufbau im wesentlichen an den zu übertragenden Kräften. So ist es bekannt, die Führungsschläuche ausschließlich aus Kunststoff bestehen zu lassen, wobei der Führungsschlauch auch zweischalig, d. h. aus einem Innenschlauch und einem Mantelschlauch, aufgebaut sein kann (DE-U-1 880̸ 165). Dabei werden als Materialien für den Mantelschlauch Polyvinylchlorid oder Polyethylen und für den Innenschlauch Polyamid vorgeschlagen. Allerdings werden solche Betätigungszüge wegen der relativ geringen Festigkeit und Steifigkeit nur dort eingesetzt, wo die zu übertragenden Kräfte gering sind, wie beispielsweise zur Betätigung von Heizungs- und Klimaeinrichtungen, als Türinnen- und Türaußenbetätigung und als Tankdeckelentriegelung (vgl. a.a.O. Seiten 28 und 29).

Bei der Verwendung zur Bremsenbetätigung an Fahrrädern sind die zu übertragenden Kräfte relativ hoch, so daß auf den Führungsschlauch entsprechend hohe Stauchkräfte wirken. Bei den bekannten Betätigungszügen wird deshalb nicht auf eine Stahldrahtarmierung, beispielsweise in Form einer kunststoffummantelten Stahlspirale, verzichtet. Dabei wird innenseitig ein anderer Kunststoff als außenseitig verwendet. Als Betätigungsseele kommt eine verzinkte Stahllitze zum Einsatz, die zwecks Vermeidung des Sägeeffekts an der Innenseite des Führungsschlauchs mit einem Polypropylen-Überzug versehen ist.

Da das Fahrrad zunehmend als Sportgerät eingesetzt wird, und zwar nicht nur als Rennrad, sondern auch als sogenanntes Mountain-Bike, werden hohe Anforderungen an den Wirkungsgrad und das Gewicht solcher Betätigungszüge gestellt. Die bekannten Betätigungszüge sind relativ schwer, und der Wirkungsgrad sowie die Exaktheit ist immer noch verbesserungsbedürftig.

Daneben sind Betätigungszüge bekannt, bei denen der Führungsschlauch aus faserverstärktem thermoplastischem Kunststoffharz besteht. Als Kunststoffharz werden angegeben Polyetheretherketon, Polyethersulfon, Polyethylentelephtalat, Polyarylat, Polyphenylensulfid, Polyimid, Polycarbonat und Polyethylentelephtalat. Als Faserverstärkungen werden Glas- oder Kohlefasern sowie aromatische Polyamidfasern und Stahlfasern vorgeschlagen. Der Betätigungszug hat den Nachteil, daß der Wirkungsgrad nicht befriedigt.

Der Erfindung liegt die Aufgabe zugrunde, einen Betätigungszug der eingangs genannten Art so auszubilden, daß er einen hohen Wirkungsgrad und ein geringes Gewicht hat und eine exakte Betätigung gewährleistet.

Diese Aufgabe wird erfindungsgemäß dadurch gelöst, daß der Innenschlauch wenigstens hauptsächlich aus einem polymerisierten Tetrafluorethylen, insbesondere Polytetrafluorethylen, und der Mantelschlauch wenigstens hauptsächlich aus einem Hochleistungskunststoff mit hoher mechanischer Festigkeit und Steifheit besteht, nämlich aus einem Polyarylat, Polyacrylimid, Polyetherimid, Polysulfon, insbesondere Polyethersulfon, Polyphenylensulfid, Polyetherketon, insbesondere Polyetheretherketon und/oder flüssigkristallinem Polymer und/oder einem Kunststoff besteht, dessen Festigkeit und Steifheit in dem Bereich der Festigkeiten und Steifheiten vorstehender Kunststoffe liegt. Dabei sollte der Betätigungsmantel keine Metallarmierung enthalten. Günstig kann jedoch eine Faserarmierung beispielsweise aus Glas- oder Kohlefaser sein.

Grundgedanke der Erfindung ist es, eine Art Funktionsteilung vorzunehmen. Der Innenschlauch besteht aus einem sehr reibungsarmen Material, das einen hohen Wirkungsgrad, d. h. eine weitgehende Übertragung der eingeleiteten Kräfte auf die Bremse, gewährleistet. Der Mantel schlauch dient der Aufnahme der Stauchkräfte und ist deshalb aus einem Hochleistungskunststoff mit herausragenden mechanischen Eigenschaften hergestellt. Die Funktionsteilung ermöglicht es, für die jeweilige Funktion optimale Materialien zu verwenden.

Versuche haben gezeigt, daß ein solcher Betätigungszug in der Lage ist, selbst höchste Stauchkräfte ohne Beschädigung aufzunehmen und gleichzeitig einen bisher nicht erreichten Wirkungsgrad zu erreichen. Die für den Mantelschlauch vorgesehenen Materialien machen eine Stahlarmierung entbehrlich und sorgen so für sehr geringes Gewicht.

In Ausbildung der Erfindung ist vorgesehen, daß der Innenschlauch einen dessen Abriebfestigkeit verbessernden Füllstoff enthält. Dabei kommen als Füllstoffe Kohlenstoff, beispielsweise in Form von Kohle oder Graphit, Glas, Titanat und/oder Polyphenylensulfid in Frage. Der Füllstoff sollte wenigstens im Bereich der Innenoberfläche, vorzugsweise über den gesamten Querschnitt des Innenschlauchs mit einein Gehalt von 5 bis 12 Gew.-% vorliegen, wobei die Kombination von Polyphenylensulfid und Glas besonders vorteilhaft ist. In diesem Fall sollte das Polyphenylensulfid wenigstens im Bereich der Innenoberfläche mit einem Gehalt von 4 bis 8 Gew.-%, Rest Glas und Polytetrafluorethylen, vorliegen und dabei der Anteil von Glas höchstens 50̸ % des Anteils Polyphenylensulfid betragen.

Nach einem weiteren Merkmal der Erfindung ist vorgesehen, daß die Mantelschicht einen die Drucksteifigkeit verbessernden Füllstoff enthält. Auch in diesem Fall kann der Füllstoff Kohlenstoff, Glas, Titanat und/oder Polyphenylensulfid sein. Der Zusatz solcher Füllstoffe verringert die Elastizität und führt zu einer noch exakteren Betätigung.

Die Betätigungsseele ist vorzugsweise als Drahtlitze mit geglätteter und nicht kunststoffummantelter Oberfläche ausgebildet. Es hat sich gezeigt, daß eine solche Oberfläche ein guter Reibungspartner für das Material des Innenschlauchs ist. Vorzugsweise sollte die Drahtlitze kreisrunden Querschnitt haben.

Nach einem weiteren Merkmal der Erfindung ist vorgesehen, daß Mantelschlauch und Innenschlauch in axialer Richtung miteinander formschlüssig verankert sind. Dies kann durch Vorsprünge oder Ausnehmungen an der Berührungsfläche zwischen Mantelschlauch und Innenschlauch geschehen. Insbesondere können Ausnehmungen in die Außenseite des Innenschlauchs eingeformt und der Mantelschlauch über den Innenschlauch gespritzt werden, so daß das Material des Mantelschlauchs in die Ausnehmungen einfließt. In Sonderheit weist der Innenschlauch außenseitig eine schraubenförmige Nut und/oder einen schraubenförmigen Steg auf und faßt der Mantelschlauch in die Nut bzw. den Steg ein.

In der Zeichnung ist die Erfindung anhand von zwei Ausführungsbeispielen näher veranschaulicht. Es zeigen:
- Figur 1: einen Betätigungszug im Längsschnitt und
- Figur 2: einen zweiten Betätigungszug im Längsschnitt.

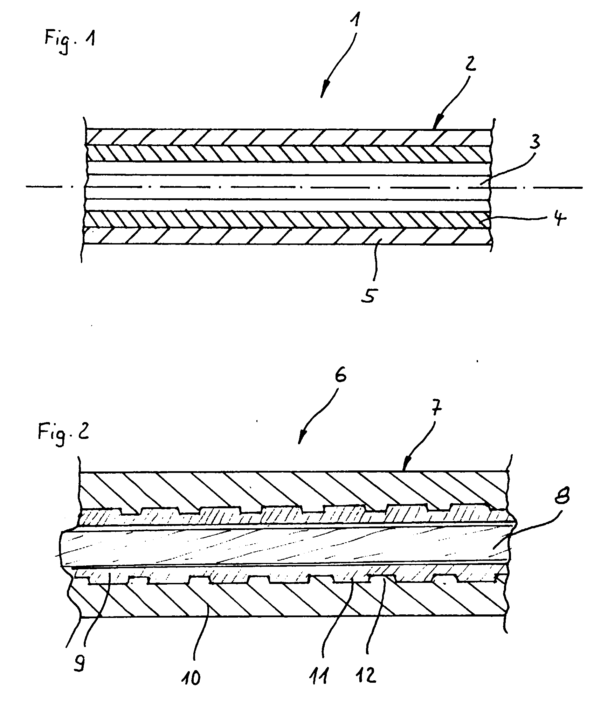

Figur 1 zeigt einen Abschnitt eines Betätigungszugs 1, der aus einem Führungsschlauch 2 und einer Betätigungslitze 3 besteht. Nicht zu sehen ist, daß die Enden des Führungsschlauchs 2 mit Anschlußmitteln versehen sind, über die sie an der Bremsbetätigungseinrichtung und im Bereich der Bremszange festgelegt werden können. Die Betätigungslitze 3 weist endseitig Elemente auf, über die sie mit dem Betätigungsorgan, in diesem Fall dem Bremshebel am Lenkrad eines Fahrrads, und mit dem zu hetätigenden Organ, nämlich der Bremszange, verbunden werden kann.

Der Führungsschlauch 2 ist zweischalig aufgebaut. Er besteht aus einem Innenschlauch 4 und einem diesen umgebenden Mantelschlauch 5, wobei beide Schläuche 4, 5 miteinander fest verbunden sind, beispielsweise durch Extrudierung des Mantelschlauchs 5 auf den Innenschlauch 4. Der Innenschlauch 4 besteht aus Polytetrafluorethylen, in das ein Füllstoff eingelagert ist, der die Abriebfestigkeit des PTFE verbessert. Der Mantelschlauch 5 besteht aus Polyetheretherketon, das sich durch hohe mechanische Festigkeit und Steifheit auszeichnet. Der Mantelschlauch 5 dient somit der Aufnahme der Stauchkräfte, die bei Kraftaufbringung auf die Betätigungslitze 3 auftreten. Dabei wird eine möglichst geringe Längenänderung bei der Stauchung des Führungsschlauchs 2 angestrebt.

Die Betätigungslitze 3 ist kalibriert, d. h. sie ist außenseitig wie ein massiver Draht glatt ausgebildet. Die einzelnen Drähte sind nur noch im Querschnitt erkennbar. Die glatte Metalloberfläche sorgt zusammen mit den hervorragenden Gleiteigenschaftend es PTFE für einen geringen Reibungswiderstand und damit hohen Wirkungsgrad. Das Gesamtgewicht ist wegen der ausschließlichen Verwendung von Kunststoff für den Führungsschlauch 2 gering.

Figur 2 zeigt einen Betätigungszug 6 mit Führungsschlauch 7 und Betätigungslitze 8. Auch hier ist der Führungsschlauch 7 zweischalig aufgebaut und besteht aus einem Innenschlauch 9 und einem diesen umgebenden Mantelschlauch 10̸. Die Materialien stimmen mit den für den Betätigungsschlauch 1 gemäß Figur 1 beschriebenen Materialien überein.

Der einzige Unterschied zu dem Ausführungsbeispiel gemäß Figur 1 besteht darin, daß die Außenseite des Innenschlauchs 9 Vorsprünge - beispielhaft mit 11 bezeichnet - aufweist. Sie sind dadurch hergestellt worden, daß der Innenschlauch 9 zunächst oben- und untenseitig mit einem Längssteg ausgebildet worden ist, welcher dann mit Hilfe eines Schneidwerkzeuges in regelmäßigen Abständen stellenweise entfernt worden ist, so daß sich in Längsrichtung gesehen ein Wechsel aus Vorsprüngen 11 und Ausnehmungen 12 an Ober- und Unterseite des Innenschlauchs 9 ergibt. Anschließend ist der Mantelschlauch 10̸ aufextrudiert worden, so daß sich sein Material in die Ausnehmungen 12 einlagern konnte. Auf diese Weise wird eine feste Verbindung zwischen Innenschlauch 9 und Mantelschlauch 10̸ in axialer Richtung hergestellt.

## Patentansprüche

1. Betätigungszug (1, 6) insbesondere für die Betätigung von Fahrradbremsen, mit einem Führungsschlauch (2, 7) und einer darin axial beweglichen Betätigungsseele (3, 8), wobei der Führungsschlauch (2, 7) einen Innenschlauch (4, 9) und einen diesen umgebenden Mantelschlauch (5, 10̸) aufweist,
dadurch gekennzeichnet, daß der Innenschlauch (4, 9) wenigstens hauptsächlich aus einem polymerisierten Tetrafluorethylen und der Mantelschlauch wenigstens hauptsächlich aus einem Polyarylat, Polyacrylimid, Polyetherimid, Polysulfon, Polyphenylensulfid, Polyetherketon und/oder flüssigkristallinem Polymer und/oder einem Kunststoff besteht, dessen Steifheit und Festigkeit in dem Bereich der Steifheiten und Festigkeiten vorstehender Kunststoffe liegt.

2. Betätigungszug nach Anspruch 1,
dadurch gekennzeichnet, daß der Mantelschlauch (5, 10̸) armiert ist.

3. Betätigungszug nach Anspruch 2,
dadurch gekennzeichnet, daß der Mantelschlauch (5, 10̸) faserarmiert ist.

4. Betätigungszug nach einem der Ansprüche 1 bis 3,
dadurch gekennzeichnet, daß der Führungsschlauch (2, 7) keine Metallarmierung enthält.

5. Betätigungszug nach einem der Ansprüche 1 bis 4,
dadurch gekennzeichnet, daß der Innenschlauch (4, 9) einen dessen Abriebfestigkeit verbessernden Füllstoff enthält.

6. Betätigungszug nach Anspruch 5,
dadurch gekennzeichnet, daß der Füllstoff Kohlenstoff, Glas, Titanat und/oder Polyphenylensulfid ist.

7. Betätigungszug nach Anspruch 5 oder 6,
dadurch gekennzeichnet, daß der Füllstoff wenigstens im Bereich der Innenoberfläche des Innenschlauchs mit einem Gehalt von 5 bis 12 Gew.-% vorliegt.

8. Betätigungszug nach Anspruch 6 oder 7,
dadurch gekennzeichnet, daß der Füllstoff aus einer Kombination von Polyphenylensulfid und Glas besteht.

9. Betätigungszug nach Anspruch 8,
dadurch gekennzeichnet, daß Polyphenylensulfid wenigstens im Bereich der Innenoberfläche mit einem Gehalt von 4 bis 8 Gew.-%, Rest Glas und Polytetrafluorethylen, vorliegt.

10. Betätigungszug nach Anspruch 9,
dadurch gekennzeichnet, daß der Anteil von Glas höchstens 50̸ % des Anteils Polyphenylensulfid beträgt.

11. Betätigungszug nach einem der Ansprüche 1 bis 10̸,
dadurch gekennzeichnet, daß der Mantelschlauch (5, 10̸) einen die Stauchsteifigkeit verbessernden Füllstoff enthält.

12. Betätigungszug nach Anspruch 10̸,
dadurch gekennzeichnet, daß der Füllstoft Kohlenstoff, Glas, Titanat und/oder Polyphenylensulfid ist.

13. Betätigungszug nach einem der Ansprüche 1 bis 11,
dadurch gekennzeichnet, daß die Betätigungsseele (3, 8) als als Drahtlitze mit geglätteter Oberfläche ausgebildet.

14. Betätigungszug nach Anspruch 12,
dadurch gekennzeichnet, daß die Drahtlitze (3, 8) kreisrunden Querschnitt hat.

15. Betätigungszug nach einem der Ansprüche 1 bis 12,
dadurch gekennzeichnet, daß der Füllstoff in Teilchenform vorliegt.

16. Betätigungszug nach Anspruch 13,
dadurch gekennzeichnet, daß die Teilchen in einem Korngrößenbereich von 1 bis 10̸ µm vorliegen.

17. Betätigungzug nach einem der Ansprüche 1 bis 16,
dadurch gekennzeichnet, daß Mantelschlauch (10̸) und Innenschlauch (9) auch in axialer Richtung miteinander formschlüssig verankert sind.

18. Betätigungszug nach Anspruch 17,
dadurch gekennzeichnet, daß der Innenschlauch (9) außenseitig in Längsrichtung gesehen im Wechsel Vorsprünge (11) und Ausnehmungen (12) aufweist.
